# EUROPÄISCHE PATENTSCHRIFT

(11) **EP 1 916 880 B1**
(45) Veröffentlichungstag und Bekanntmachung des Hinweises auf die Patenterteilung: **05.08.2009**
(21) Anmeldenummer: 07014146.0
(22) Anmeldetag: 19.07.2007
(51) Int. Cl.: H05B 33/08

(54) **Verfahren und Schaltung zum Schutz von aktiven LED-Matrix-Displays**
Method and switch for protecting active LED matrix displays
Procédé et circuit pour la protection d'écrans à matrice DEL actifs

(30) Priorität: 25.10.2006 DE 102006050123
(43) Veröffentlichungstag der Anmeldung: 30.04.2008
(73) Patentinhaber: BuS Elektronik GmbH & Co. KG, 01589 Riesa (DE)
(72) Erfinder: Thielemann, Gerald, 01589 Riesa (DE)
(74) Vertreter: Kaufmann, Sigfrid

(56) Entgegenhaltungen:
- EP-A- 0 960 738

## Beschreibung

Die Erfindung betrifft ein Verfahren zur Erhöhung der Lebensdauer und zur Verhinderung der bekannten Mitglimmeffekte durch Schutz von aktiven LED-Matrix-Displays vor Silbermigration von den Kathoden zu den Anoden der LEDs und die dazugehörige Schaltung.

LED-Displays werden seit Längerem in vielen Bereichen eingesetzt. Ein wichtiges Anwendungsgebiet sind großflächige Anzeigen für Informationssysteme im öffentlichen Bereich, wie z. B. Anzeigen auf Bahnhöfen, an Haltestellen des öffentlichen Nahverkehrs und in Flughäfen, Krankenhäusern, Schulen, Schwimmbädern und Kindergärten sowie in Firmen- und Bankgebäuden. Solche Anzeigen sind meist erhöhter Feuchtigkeit und großen Temperaturschwankungen ausgesetzt. Infolgedessen lässt sich praktisch nie vollständig verhindern, dass aufgrund von Undichtigkeiten des Gehäuses, in dem die Displays untergebracht sind, und verursacht durch Kondensationseffekte Feuchtigkeit im Bereich der LEDs auftritt.

LED-Matrix-Displays können als statische oder gemultiplexte Anzeigen aufgebaut sein. Bei statischen Anzeigen hat jede LED einen eigenen Treiber. Dagegen sind die kostengünstigeren Multiplex-Displays in Spalten und Zeilen gegliedert, wobei immer eine Spalte angesteuert und gleichzeitig die Zeileninformation angelegt wird. Somit entsteht Spalte für Spalte ein Bild. Durch die Verschaltung in Spalten und Zeilen werden Leuchtdioden, die nicht aktiv sind, mit einer Reversespannung beaufschlagt. Die Reversespannung sorgt dafür, dass die Sperrschicht der LEDs umgeladen wird. Dadurch wird ein schnelles Ausschalten der LEDs ermöglicht.

Für LED-Displays werden üblicherweise LEDs mit kathodenseitig angeklebten Chips verwendet. Der dazu verwendete Kleber ist silberhaltig.

Silbermigration, d. h. eine Bewegung von Silberionen im elektrischen Feld, findet statt, wenn Silberionen als Ladungsträger vorhanden sind, sich diese in einem Elektrolyten, wie z. B. einem Wasser-Feuchtigkeitsfilm, befinden und an dem Elektrolyten mittels Elektroden, von denen mindestens die Kathode reversibel ist, eine Spannung anliegt.

Bei LED-Matrix-Displays wirkt die mittels silberhaltigem Kleber befestigte Kathode als reversible Silberelektrode und der unvermeidliche Feuchtigkeitsfilm als Elektrolyt. Demzufolge werden beim Anlegen der Reversespannung Silberionen von der Kathode zur Anode transportiert. Das Anlegen einer Spannung in Durchlassrichtung ist hingegen unschädlich, da die Anode kein Silber enthält. Durch die Silbermigration entsteht ein parasitärer Bypass, der die LEDs weniger stark leuchten lässt. Außerdem wirkt sich der Bypass negativ auf die Lebensdauer der LEDs aus.

Zur Verringerung der oben genannten nachteiligen Effekte sind verschiedenartige Lösungsvorschläge, wie Verbesserungen der Dichtheit der Gehäuse von LED-Displays, das Einfügen von Barriereschichten und die Verwendung von elektronischen Schutzschaltungen, bekannt. EP 960 738 beschreibt ein Verfahren um Silbermigration zu verhindern in einem Halbleiterchip.

In DE 102 07 264 C1 wird ein Gehäuse offenbart, das weitgehend wasserdicht und trotzdem gut belüftet ist. Zu diesem Zweck befinden sich im Gehäuserahmen Luftdurchtrittsöffnungen, die mit Membranen aus wasserdichten, jedoch atmungsaktiven Vliesverbundstoffen, wie ,Goretex' und 'Sympatex', verschlossen sind. Diese Lösung vermindert das Eindringen von Feuchtigkeit in den Geräteinnenraum zwar nachhaltig, aber nicht vollständig, sodass die beschriebenen Nachteile immer noch bestehen.

Um die Anfälligkeit gegenüber Korrosion und Silbermigration von Silberkontakten im Allgemeinen zu vermindern, wird in DE 33 12 713 A1 vorgeschlagen, zwischen der Silberbeschichtung und der Oberfläche des zu beschichtenden Substrats zwei Schichten aus Legierungen oder Reinmetallen der Elemente Ni, Co, Cr, Pd, Sn oder Cd einzubringen. Das Aufbringen von derartigen Barriereschichten auf silberhaltigem Kleber ist allerdings technologisch schwierig und aufwändig.

Eine Schaltung, welche die Kontaktelektroden eines LC-Displays bei auftretender Feuchtigkeit vor elektrolytischer Korrosion bzw. Zersetzung schützen soll, wird in JP 61294417 AA vorgeschlagen. Mit Hilfe eines Taupunktsensors wird die relative Luftfeuchtigkeit in der Peripherie des Displays gemessen. Überschreitet die Luftfeuchtigkeit einen Grenzwert, so wird die Betriebsspannung des Displays und damit die komplette Anzeige abgeschaltet. Eine ähnliche Schaltung wäre zwar auch für LED-Displays denkbar, kommt allerdings, da eine öffentliche Anzeige unter allen Umgebungsbedingungen funktionieren und den gewünschten Inhalt sicher darstellen muss, praktisch nicht in Betracht.

Der Erfindung liegt die Aufgabe zugrunde, die Lebensdauer aktiver LED-Matrix-Displays zu erhöhen und die bekannten Mitglimmeffekte zu vermeiden. Zudem soll es möglich sein, für die Displays Standard-LEDs mit kathodenseitig angeklebten Chips zu verwenden und die Displays auch bei auftretender Feuchtigkeit sicher zu betreiben.

Diese Aufgabe wird erfindungsgemäß durch die Merkmale der Ansprüche 1 und 3 gelöst. Weitere vorteilhafte Ausführungen ergeben sich aus den Ansprüchen 2, 4 und 5.

Nach Maßgabe der Erfindung werden alle LEDs eines aktiven, dynamischen LED-Matrix-Displays zum Schutz vor Silbermigration von den Kathoden zu den Anoden, ständig mit einer positiven Spannung in Durchlassrichtung vorgespannt. Die Höhe dieser Vorspannung liegt erfindungsgemäß im Bereich von 0,1 bis 6 V. Der optimale Wert der Vorspannung wird von dem Typ der eingesetzten LEDs bestimmt. Die Vorspannung muss jedoch in jedem Fall so festgelegt werden, dass die Flussspannung U_{f} und damit der Strom l_{f} durch die LEDs so niedrig sind, dass ein Mitglimmen der LED_{S}, die ab ca. 150 nA sichtbar glimmen, verhindert wird.

Die Schaltung zum Schutz von LED-Matrix-Displays ist dadurch geprägt, dass die Kathoden und Anoden mit Hilfe von Spannungsteilern auf unterschiedliche elektrische Potentialwerte gelegt sind. Um eine positive Vorspannung zu gewährleisten, ist die Anode auf ein entsprechend der Vorspannung höheres Potential als die Kathode eingestellt.

Durch diese permanente Vorspannung wird das Auftreten der Silbermigration von der Kathode zur Anode vermieden. Die erfindungsgemäßen Widerstandskombinationen räumen außerdem die Ladungsträger aus der Sperrschicht aus, sodass nach wie vor hohe Ausschaltgeschwindigkeiten gewährleistet sind.

In einer vorteilhaften Ausführung hat die Versorgungsspannung des Displays einen Wert aus dem Bereich von 3,0 bis 7,0 V; zwischen der Kathode und der Anode liegt eine Spannung von 0,1 bis 6V an, wobei die Anode eine positivere Spannung als die Kathode aufweist. Es sind Widerstände mit Widerstandswerten von 100 S2 bis 100 kΩ verwendet; typischerweise liegen die Widerstände im Bereich von wenigen kΩ, beispielsweise im Bereich von 1 bis 10 kΩ. Bei der Auswahl der Widerstandswerte muss ein Kompromiss zwischen einerseits kleinen Widerstandswerten, die große Ruheströme verursachen, und andererseits großen Widerstandswerten, die langsame Ausschaltgeschwindigkeiten zur Folge haben, gefunden werden.

Neben den bereits angeführten Vorteilen der Erfindung werden auch sichtbare Mitglimmeffekte, die bekanntermaßen bei Multiplex-Displays auf Grund eines Ladungspumpeneffektes auftreten, vermieden, da die Widerstandsspannungsteiler, bei entsprechend angepassten Widerstandwerten, überschüssige Ladung abtransportieren.

Da für alle Anoden einer Spalte und alle Kathoden einer Zeile des Displays nur jeweils ein Widerstandsspannungsteiler notwendig ist, ist der schaltungstechnische Aufwand gering. Zudem handelt es sich bei den eingesetzten Widerständen um sehr preiswerte Bauteile.

Die Erfindung wird nachfolgend anhand eines Ausführungsbeispiels näher erläutert; hierzu zeigen
- Fig. 1:: die Widerstandsbeschaltung einer LED
- Fig. 2:: die Widerstandsbeschaltung eines Ausschnitts von drei Spalten/drei Zeilen einer Displayschaltung.

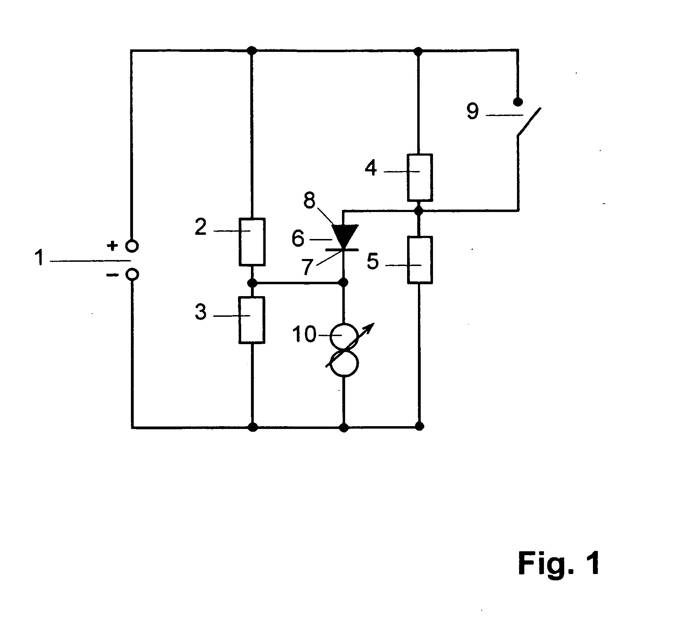

Die in Fig. 1 dargestellte Schaltung stellt die Widerstandsbeschaltung am Beispiel einer LED 6 dar, welche durch die Spannungsquelle 1 mit einer Ausgangsspannung von 3,6 V betrieben wird. Die Widerstände 2 und 3 bilden den Spannungsteiler, der an die Kathode 8 eine Spannung von 2,1 V anlegt; über die Widerstände 4 und 5 wird entsprechend der Anode 7 eine Spannung von 2,3 V zugeführt. Zwischen der Kathode 8 und der Anode 7 besteht folglich eine Ruhespannung von 0,2 V in Durchlassrichtung der Leuchtdiode 6.

Wird der Schalter der Spaltensteuerung 9 geschlossen, dann beträgt die Spannung an der LED 6 ca. 1,4 V. Ist die Stromquelle 10 der Zeilensteuerung eingeschaltet, so liegt an der Diode 6 ebenfalls eine Spannung von ca. 1,4 V an. Die verwendete Leuchtdiode 6 leuchtet jedoch erst bei einer angelegten Spannung von ca. 2,0 V sichtbar. Schalten die Spalten- und Zeilensteuerung zur gleichen Zeit, so liegt an der Leuchtdiode 6 nahezu die volle Flussspannung an, und die Leuchtdiode 6 leuchtet.

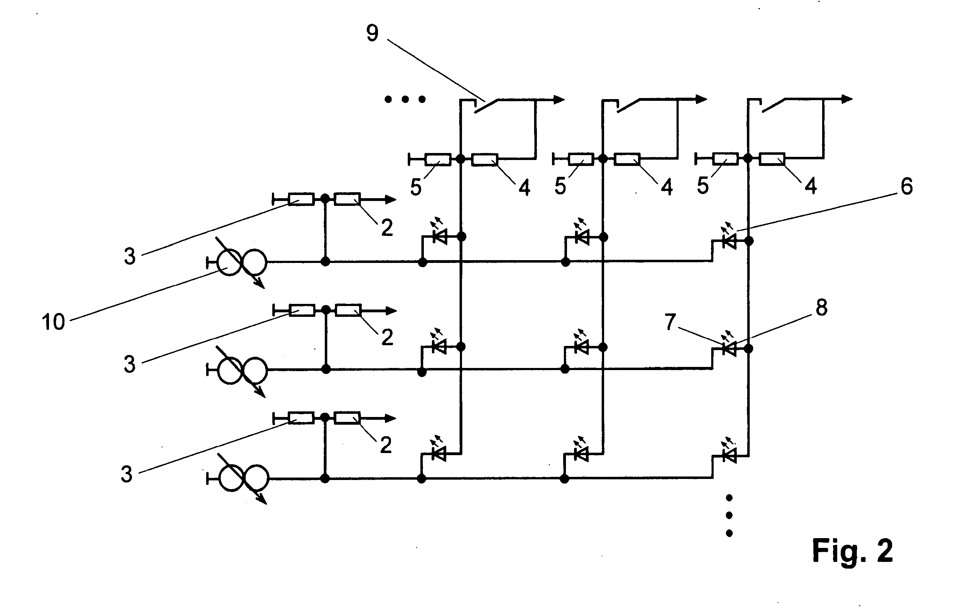

In Fig. 2 wird die Widerstandsbeschaltung an einem Ausschnitt von drei Spalten und drei Zeilen aus der Schaltung eines größeren Displays dargestellt. Wie durch die Punktierung angedeutet, kann die Schaltung durch Einfügen von weiteren Spalten oder Zeilen auf beliebige Displaygrößen erweitert werden. Man sieht auch, dass pro Spalte und pro Zeile nur jeweils ein Spannungsteiler benötigt wird.

Die Spannungsteiler für die Zeilen und die der Spalten sind mit den gleichen Widerstandswerten aufgebaut, die in der Schaltung mit nur einer LED 6 verwendet werden.

### Liste der verwendeten Bezugszeichen

### Fig. 1 und Fig. 2

- 1: Spannungsquelle
- 2: Widerstand 3,9 kΩ
- 3: Widerstand 5,6 kΩ
- 4: Widerstand 1 kΩ
- 5: Widerstand 1,8 kΩ
- 6: Leuchtdiode
- 7: Anode
- 8: Kathode
- 9: Schalter (Spaltensteuerung)
- 10: Stromquelle (Zeileninformation)

## Patentansprüche

1. Verfahren zum Schutz von LED-Matrix-Displays, **dadurch gekennzeichnet, dass** die Silbermigration von den Kathoden (8) zu den Anoden (7) der im Display verwendeten LEDs verhindert wird, indem alle LEDs ständig mit einer positiven Spannung im Bereich von 0,1 bis 6 V in Durchlassrichtung vorgespannt werden.

2. Verfahren nach Anspruch 1, **dadurch gekennzeichnet, dass** eine Vorspannung von 0,2 V in Ruhelage verwendet wird.

3. Schaltung zum Schutz von aktiven, dynamischen LED-Matrix-Displays vor Silbermigration von den Kathoden (8) zu den Anoden (7) der LEDs (6), **dadurch gekennzeichnet, dass** sowohl die Anoden (7) als auch die Kathoden (8) an jeweils separate Widerstandsspannungsteiler, die dem Herunterteilen der Betriebsspannung auf für die Kathode (8) und Anode (7) verschiedene Vorspannungswerte dienen, angeschlossen sind.

4. Schaltung nach Anspruch 2, **dadurch gekennzeichnet, dass** die Versorgungsspannung des Displays einen Wert von 3,0 bis 7 V hat und zwischen der Kathode und der Anode eine Spannung von 0,1 bis 6V anliegt, wobei die Anode eine positivere Spannung als die Kathode aufweist.

5. Schaltung nach Anspruch 3 **dadurch gekennzeichnet, dass** die Spannungsteiler aus Widerständen mit Widerstandswerten von 100 Ω bis 100 kΩ aufgebaut sind.

## Claims

1. A method to protect LED matrix displays, **characterised in that** the silver migration from the cathodes (8) to the anodes (7) of the LEDs used in the display is prevented by constantly applying a forward bias in the form of a positive voltage in the range from 0.1 to 6 V to all LEDs.

2. A method according to Claim 1, **characterised in that** an open-loop bias of 0.2 V is used.

3. A circuit to protect active dynamic LED matrix displays against silver migration from the cathodes (8) to the anodes (7) of the LEDs (6), **characterised in that** the anodes (7) and the cathodes (8) are each connected to separate resistive voltage dividers, which serve to scale the operating voltage to different bias values for the cathode (8) and anode (7).

4. A circuit according to Claim 2, **characterised in that** the supply voltage of the display lies between 3.0 and 7 V and a voltage from 0.1 to 6 V is present between the cathode and anode, with the anode displaying a more positive voltage than the cathode.

5. A circuit according to Claim 3, **characterised in that** the voltage divider is formed from resistors with resistance values from 100 Ω to 100 kΩ.

## Revendications

1. Procédé de protection des afficheurs LED à matrice, **caractérisé en ce qu'**il empêche la migration d'argent des cathodes (8) aux anodes (7) des LED utilisées dans l'afficheur en appliquant aux LED une tension de polarisation positive et permanente, comprise entre 0,1 et 6 V, dans le sens de conduction.

2. Procédé selon la revendication 1, **caractérisé en ce qu'**une tension de polarisation de 0,2 V est utilisée en position de repos.

3. Circuit visant à protéger les afficheurs LED à matrice actifs et dynamiques contre la migration d'argent des cathodes (8) aux anodes (7) des LED (6), **caractérisé en ce que** les anodes (7) et les cathodes (8) sont raccordées à des diviseurs de tension séparés servant à diviser la tension de service en tensions de polarisation différentes pour la cathode (8) et l'anode (7).

4. Circuit selon la revendication 2, **caractérisé en ce que** la tension d'alimentation de l'afficheur est comprise entre 3,0 et 7 V et qu'une tension comprise entre 0,1 et 6 V est appliquée entre la cathode et l'anode, la tension de l'anode étant plus positive que la tension de la cathode.

5. Circuit selon la revendication 3, **caractérisée en ce que** les diviseurs de tension sont constitués de résistances ayant des valeurs de résistance comprises entre 100 Ω et 100 kΩ.
